# EUROPEAN PATENT APPLICATION

(11) **EP 2 873 655 A1**
(43) Date of publication of application: **20.05.2015**
(21) Application number: 13193283.2
(22) Date of filing: 18.11.2013
(51) Int. Cl.: C04B 24/26, C04B 28/04

(54) **Air-entraining agent for hydraulic binders**

(71) Applicant: Sika Technology AG, 6340 Baar (CH)
(72) Inventor: Lai, Fook Chuan, 70200 Sremban (MY)
(74) Representative: Sika Patent Attorneys

(57) **Abstract**

The present invention describes the use of a polycarboxylate ether as an air-entraining agent in a composition comprising a hydraulic binder, wherein the polycarboxylate ether is a copolymer comprising monomer units A of acrylic acid or a salt thereof and monomer units B of polyethylene glycol isoprenyl ether and/or polyethylene glycol methallyl ether.

The air-entraining agent is particularly suitable for mortar cements, in particular for mortar cements comprising fly ash.

## Description

### Technical field

The invention relates to the use of a polycarboxylate ether as an air-entraining agent in a composition comprising a hydraulic binder and the air-entraining agent.

### Background of the invention

Cement, building limes and other hydraulic binders are widely used in construction applications. They are usually used for concretes or mortars typically also including aggregates and additives. For use, the composition comprising the hydraulic binder is mixed with water so that a reaction of the hydraulic binder and water takes place, generally called hydration. Upon hydration the hydraulic binder is hardened to form a solid building material.

An important property of such systems is the air content. Air entrainment is a method used for compositions containing hydraulic binders to increase the durability of the hardened product exposed to freezing and thawing environment. Moreover, higher air content increases workability of compositions such as concretes or mortars while in a plastic state. Air entrainment may also influence other properties of the system. Thus, compressive strength usually decreases when the air content is increased. The total volume of air in concrete or mortar is usually measured on the plastic concrete or mortar.

Thus, for a long time entrained air is deliberately incorporated in such systems to reduce damage caused by repeated freeze-thaw cycles. So called air-entraining agents are used to increase the air content by producing a stable system of air bubbles in the fresh material and, as a result, discrete air voids in the hardened product. The air voids in the hardened products provide empty space for freezing water, relieving pressure and preventing damage.

Entrained air is produced during mechanical mixing of the composition comprising hydraulic binder and water such as mortar or concrete that contains an air-entraining agent. The shearing action of mixer blades continuously breaks up the air into a fine system of bubbles. The air-entraining agent stabilizes these air bubbles.

Examples of air-entraining agents conventionally used are alkyl sulfates, olefin sulfonates, diethanolamines, betaine and blends thereof.

The air content in fresh concrete or mortar and in the hardened product obtained therefrom also depends on the type and proportion of the ingredients in the composition and on production and construction variables. For instance, increased cement content results in decreased air content, whereas increased sand content results in increased air content. Production and construction variables influencing the air content are e.g. methods of batching, mixing procedures, time and speed of mixing, temperature and pumping.

Generally, entrainment of air is difficult in mortars such as masonry cement. In particular, when fly ash is included in the system it is very difficult to achieve high air content since the fly ash causes reduction of the air content. On the other hand, a high air content is advantageous for masonry cement. Accordingly, there is still a need of suitable systems for providing high air content in mortars such as masonry mortars, in particular for mortars including fly ash.

It is known to employ polycarboxylate ethers as grinding agents in cementitious materials. These polymers have a comb polymer structure.

US 2011/0306704 A1 describes a method for retaining workability and strength of a cementitious material during mill grinding comprising introducing a polycarboxylate comb polymer as an interground additive before or during grinding of the cementitious material, wherein the polycarboxylate comb polymer contains a carbon backbone and pendant polyoxyalkylene groups with linkage groups comprising at least one ether group.

### Summary of the invention

The object of the present invention is to provide novel air-entraining agents for compositions comprising hydraulic binders, in particular mortars comprising masonry cement, to overcome the disadvantages of the prior art discussed above. In particular, it should be possible to increase the air content in mortars, even if fly ash is contained as an ingredient. Moreover, other properties of the system such as compressive strength should not be affected to a large extent.

Surprisingly, this object could be achieved by incorporating a particular type of polycarboxylate ether as an air-entraining agent in a composition comprising a hydraulic binder.

Accordingly, the present invention relates to the use of a polycarboxylate ether as an air-entraining agent in a composition comprising a hydraulic binder, wherein the polycarboxylate ether is a copolymer comprising monomer units A of acrylic acid or a salt thereof and monomer units B of polyethylene glycol isoprenyl ether and/or polyethylene glycol methallyl ether. The air-entraining agent increases entrainment of air into the composition when the composition is mixed with water.

By using this particular polycarboxylate ether as an air-entraining agent an unexpected increase of air content in mortars could be achieved, even if the mortar contains fly ash. At the same time, properties of the materials such as strength and flow are essentially maintained at a high level or even improved.

The invention will be described in detail in the following.

### Detailed description of the invention

The average molecular weight as used herein is understood to mean the weight average molecular weight (Mw), as determined by gel permeation chromatography (GPC) method. Preferably, polyethylene glycol is used as a standard.

An air-entraining agent is an additive which is used in a composition comprising a hydraulic binder to support entrainment of air during mixing of the composition with water for increasing the air content in the mixture and, as a result, in the hardened product of the mixture, compared to the same mixture where the air-entraining agent is not included. Air-entraining agents are sometimes also called air-entraining admixtures.

A monomer unit of a monomer refers to the repeating unit in a polymer or copolymer which is obtained from the monomer by polymerization or copolymerization, e.g. from an olefinically unsaturated monomer by radical polymerization or copolymerization.

According to the present invention, a polycarboxylate ether is used as an air-entraining agent in a composition comprising a hydraulic binder, wherein the polycarboxylate ether is a copolymer comprising monomer units A of acrylic acid or a salt thereof and monomer units B of polyethylene glycol isoprenyl ether and/or polyethylene glycol methallyl ether.

Polyethylene glycol isoprenyl ether (I-PEG, also named T-PEG) has the following structure:

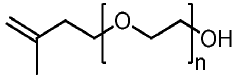

Polyethylene glycol methallylether (H-PEG) has the following structure:

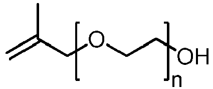

In both I-PEG and H-PEG, index n represent the number of the repeating units which may vary in broad ranges. For preparing the copolymer used in the invention, I-PEG and/or H-PEG with n ranged from 3 to 250, preferably from 20 to 150, and more preferably from 40 to 90; are preferably employed. I-PEG and H-PEG are commercially available and can be prepared by the skilled person by common methods. As is clear to those skilled in the art, these monomers usually have a certain molecular weight distribution so that index n represents an average value.

Accordingly, monomer unit A has preferably the following structure

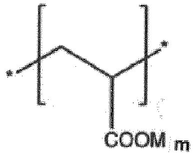

Monomer unit B has preferably at least one of the following structures

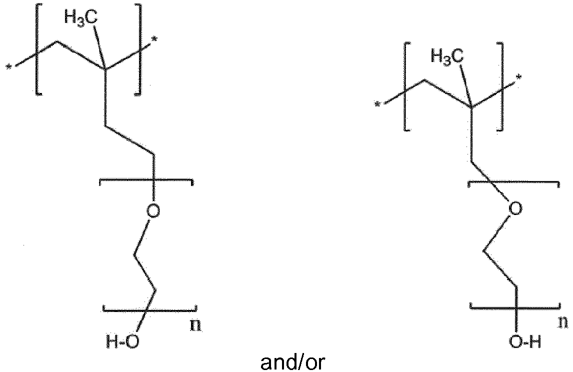

In the structure of monomer units A, M represents H, alkali metal, earth alkaline metal, divalent or trivalent metal, ammonium or organic ammonium or a mixture thereof. M is of course a cationic group. If M is a monovalent cation m is 1, and if M is a divalent or trivalent cation m is 1/2 or 1/3, respectively. For polyvalent cations further counterions are present which may be a carboxylate group in the same or a different copolymer molecule.

Specific examples for group M are H, Li, Na, K, Ca, Mg, NH₄ and HₓNR₄₋ₓ, wherein R is a hydrocarbon group, in particular alkyl, preferably C₁₋₆ alkyl, e.g. methyl, ethyl, propyl or butyl, and x is an integer of 0 to 3, preferably 0 or 1, or a mixture thereof. Ammonium and organic ammonium groups are preferably obtained by neutralization of the carboxyl group with ammonia or amines, preferably a tertiary amine, in which case x is 1.

In both possible structures of monomer units B, n is independently from 3 to 250, preferably from 20 to 150, more preferably from 40 to 90, and most preferably 40 to 70.

The molar ratio of monomer units A to monomer units B is preferably in the range from 10/1 to 1/2, more preferably from 6/1 to 1 /1, and most preferably from 6/1 to 2.5/1 or 5/1 to 3/1 such as about 3.6.

The copolymer comprises monomer units A and monomer units B as defined above. The copolymer may optionally comprise further monomer units derived from other monomers, in particular olefinically unsaturated monomers, for instance, in an amount of not more than 20 mol-%, preferably not more than 10 mol-%, more preferably not more than 5 mol-%, and in particular not more than 2 mol-%. It is preferred that the copolymer consists or consists essentially of monomer units A and monomer units B. An example of a monomer to be used as optional other monomer is maleic anhydride.

The copolymer preferably comprises 30 to 95 mol-%, preferably 60 to 90 mol-%, of monomer units A and 5 to 70 mol-%, preferably 10 to 40 mol-%, of monomer units B, wherein the copolymer optionally comprise in addition further monomer units in an amount of not more than 20 mol-%, preferably not more than 10 mol-%, more preferably not more than 5 mol-%, and in particular not more than 2 mol-%.

It is preferred that the copolymer comprises monomer units A of acrylic acid or a salt thereof and monomer units B of either polyethylene glycol isoprenyl ether or polyethylene glycol methallyl ether, wherein it is particular preferred that monomer units B are derived from polyethylene glycol methallyl ether because these copolymers exhibit an even improved air-entraining performance.

It is therefore preferred that the copolymer comprises the following monomer units A and B 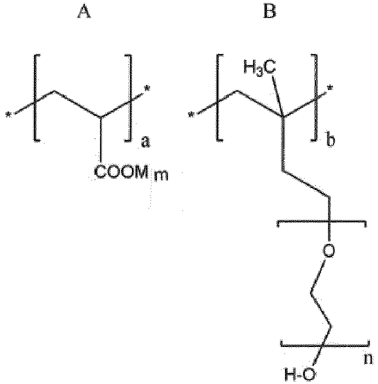 or
the copolymer comprises the following monomer units A and B

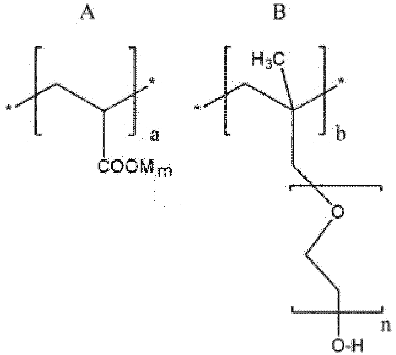

In both cases, the definitions of M, m and n are the same as defined above. All above statements, e.g. as to molar ratio of monomer units A to monomer units B, i.e. molar ratio a/b, possible further monomer units, proportions of monomer units A, monomer units B and optional further monomer units equally apply too, so that reference is made thereto.

In a particularly preferred embodiment, I-PEG having an average molecular weight (M_{W}) of about 2400 g/mol and n ≈ 53 is used together with acrylic acid or a salt thereof to prepare the copolymer. The copolymer obtained consists essentially of monomer units A and monomer units B derived from said I-PEG wherein the molar ratio a/b, i.e. the molar ratio of monomer units A to monomer units B is about 3.6/1. In other words, the copolymer comprises about 78 mol-% monomer units A and about 22 mol-% monomer units B. The copolymer may be in the acid form or in the salt form.

In an even more preferred embodiment, H-PEG having an average molecular weight (M_{W}) of about 2400 g/mol and n ≈ 53 is used together with acrylic acid or a salt thereof to prepare the copolymer. The copolymer obtained consists essentially of monomer units A and monomer units B derived from said H-PEG wherein the molar ratio a/b, i.e. the molar ratio of monomer units A to monomer units B is about 3.6/1. In other words, the copolymer comprises about 78 mol-% monomer units A and about 22 mol-% monomer units B. The copolymer may be in the acid form or in the salt form.

The copolymer can be prepared by polymerization, in particular by radical copolymerization of monomers comprising acrylic acid or a salt thereof, and at least one of polyethylene glycol isoprenyl ether and polyethylene glycol methallyl ether, and optionally other monomers, such as olefinically unsaturated monomers as defined above, for instance maleic anhydride.

Radical polymerization is a well known polymerization method and the skilled person is familiar with preparation of polymers or copolymers by this method. Radical polymerization can be started, for instance thermally, photolytically or by means of an initiator.

Radical polymerization is preferably started by means of an initiator. These initiators are well known and commercially available. Examples thereof are persulfates, e.g. potassium persulfate, peroxides, e.g. dibenzoyl peroxide and di-tert-butyl peroxide, azo compounds, e.g. azo-bis-(isobutyronitril) (AIBN) and a redox system comprising a reducing metal compound, in particular a reducing metal salt, and hydrogen peroxide or an alkyl hydrogen peroxide, wherein a redox system is preferred. The metal compound or metal salt of the redox system may contain e.g. Fe²⁺, Cr²⁺, V²⁺, Ti³⁺, Co²⁺ or Cu⁺, wherein Fe²⁺ salts such as ferrous sulfate are commonly used.

Acrylic acid or preferably a salt of acrylic acid may be used for the copolymerization reaction. Thus, after preparation the copolymer may comprise carboxyl groups or carboxylate groups. Carboxyl groups of the copolymer can be transformed into carboxylate groups and carboxylate groups of the copolymer can be transformed into carboxyl groups as needed by conventional acid-base reactions. Copolymers including both carboxyl groups and carboxylate groups are, of course, also possible.

The copolymer may be an alternating copolymer, a block copolymer or a random copolymer, but in general the copolymer is a random copolymer where the arrangement of the monomer units A (acid units) and monomer units B (polyether side chains) is essentially random in the copolymer.

The average molecular weight (Mw) of the copolymer may vary in wide ranges, but the copolymer preferably has an average molecular weight (Mw) of 5000 to 500000 g/mol and more preferably of 20000 to 200000 g/mol, especially 25000 to 70000 g/mol.

According to the invention, the air-entraining agent is used in a composition comprising a hydraulic binder. A hydraulic binder is a substantially inorganic or mineral material or blend which hardens when mixed with water. All hydraulic binders known to those skilled in the art are suitable. Typical examples of suitable hydraulic binders are cement and building limes such as hydraulic limes, and mixtures of cement and building limes.

The hydraulic binder may comprise at least one of Portland cement, fly ash, granulated blast furnace slag, lime, such as limestone and quicklime, fumed silica and pozzolana or a mixture thereof. The hydraulic binder is preferably a cement, for instance a Portland cement or alumina cement. The hydraulic binder preferably comprises a Portland cement or a mixture of Portland cement with at least one of fly ash, granulated blast furnace slag, lime, such as limestone and quicklime, fumed silica and pozzolana. Hydraulic binders such as cement usually comprise in addition calcium sulfate, such as gypsum, anhydrite and hemihydrate.

Cements can be classified based on the composition according to standards such as the European cement standard EN 197-1 or corresponding other national standards. Common cements are Portland cements, Portland-composite cements, blastfurnace cements, puzzolanic cements and composite cements.

The hydraulic binder is preferably a cement, more preferably a masonry cement. A masonry cement is used for preparing mortar. A masonry cement preferably comprises Portland cement, and optionally an inorganic material or powder such as rock flour, fly ash, volcanic ash, limestone, slag, talc, clay or mixtures thereof.

It is preferred that the hydraulic binder, in particular masonry cement, comprises fly ash and/or Portland cement. A cement, in particular a masonry cement, comprising Portland cement and fly ash is particularly preferred.

The composition comprising a hydraulic binder may be a composition consisting of the hydraulic binder. The composition comprising a hydraulic binder may comprise in addition one or more additives and/or aggregates. Typical examples of common additives or cement additives, respectively, are grinding aids, plasticizers, accelerators, corrosion inhibitors, retardants and shrinkage reducing agents. These additives are common and well known in the field of cement industry. Typical examples of aggregates are sand, gravel, crushed stone, quartz powder. Sand and/or quartz powder are preferably used.

The composition comprising a hydraulic binder may be mortar or concrete. The composition is preferably a mortar and more preferably a mortar comprising masonry cement, i.e. a masonry mortar. The terms mortar and concrete as used herein also refer to the dry composition, i.e. without water.

The proportion of the polycarboxylate ether used in the composition comprising a hydraulic binder according to the invention can vary in broad ranges. It is preferred that the polycarboxylate ether is added to the composition comprising a hydraulic binder in an amount of 50 to 5000 ppm, preferably 250 to 2500 ppm, based on the dry weight of the hydraulic binder.

The polycarboxylate ether can be added to the composition in pure form as a liquid or preferably as a solid. The solid polycarboxylate ether may be e.g. in the form of a powder, flakes, pellets, granules or plates. The polycarboxylate ether can also be added as a solution or dispersion in a solvent, such as an organic solvent and/or water. Use of an aqueous solution or dispersion of the polycarboxylate ether is preferred.

The polycarboxylate ether can be added to the composition before, during or after grinding the raw materials of the hydraulic binder to prepare the hydraulic binder. As is known to those skilled in the art, the raw materials of a hydraulic binder, in particular a cement, such as clinker, usually calcium sulfate and optional other ingredients of the hydraulic binder, are grinded, typically in a mill, to prepare the hydraulic binder. The polycarboxylate ether is preferably added to the composition before or during grinding of the raw materials of a hydraulic binder, in particular a cement, as an interground additive. In this case, the polycarboxylate ether is already contained in the so-called dry mixture, which is storable over extended periods and has good pourability.

It is also possible to add the polycarboxylate ether after grinding of the raw materials of the hydraulic binder. For instance, polycarboxylate ether may be mixed into the hydraulic binder prepared. Moreover, the polycarboxylate ether may be added to the hydraulic binder in any order with any other optional further additives and/or aggregates to prepare the composition. The polycarboxylate ether may also be added to the composition comprising the hydraulic binder together with or shortly before or shortly after the admixture of the water. In this case it may be suitable to add the polycarboxylate ether as an aqueous solution or dispersion, together with the tempering water or as a part of the tempering water.

When the composition comprising the hydraulic binder and the polycarboxylate ether used as an air-entraining agent according to the invention is mixed with water, air entrainment during mixing is supported by the polycarboxylate ether so that the air content in the mixture of the composition with water, usually fresh mortar or fresh concrete, is increased compared to the same composition but which does not contain the polycarboxylate ether and using the same treatment for the composition. Mixing of the composition with water is effected by conventional methods with which the skilled person is familiar.

After mixing the mixture of the composition with water, usually fresh mortar or fresh concrete, which is still flowable is placed to the desired position, optionally into a formwork, subsequently consolidation and/or finishing may be effected. The mixture cures and finally the hardened product is obtained. The hardened product also includes a higher content of air or air voids, respectively, due to use of the polycarboxylate ether according to the invention.

Next, the invention is further explained by examples. However, the examples are for illustration only, and shall not be considered as limiting the scope of the invention.

### Examples

In the following, amounts and percentages are based on weight unless otherwise indicated. The following compounds were used in the examples.

| | |
|---|---|
| I-PEG | Polyethylene glycol isoprenyl ether, Mw = 2400 g/mol |
| H-PEG | Polyethylene glycol methallylether, Mw = 2400 g/mol |
| Rongalite^{®} | Sodium hydroxymethanesulfinate, reducing agent |

### 1. Preparation of polycarboxylate ether P1

### Premix I

800 g of water were loaded in a tank. 81 g caustic soda (50% in water) were pumped into the tank while stirring. Then, 260 g acrylic acid were slowly added into the tank.

### Premix II

50 g of water are loaded in a tank. Then, 33 g of 35% H₂O₂ were poured into the tank.

### Premix III

A tank was charged with 80 g of water. Subsequently, 20 g of solid Rongalite^{®} were added. The mixture was stirred until the solid dissolved.

### Synthesis

2200 g of water were charged into a reactor. 57 g of Na-hypophosphoric acid were added and the mixture was stirred until the solid is completely dissolved. The reaction mixture was stirred during the whole synthesis. 2430 g of I-PEG were added as a powder during which the mixture is heated to a temperature of about 40°C and stirred until I-PEG is dissolved. Subsequently, solid iron(II) sulfate (1,20 g) was added into the reactor. Then, the mixture was cooled down to 25°C. Next 80 g of Premix I was added. Subsequently, Premix II, Premix III and the rest of Premix I were dosed to the mixture within about 1 h. After 5 min of dosing, the necessary presence of peroxide was tested by a peroxide strip which turns into blue when peroxide is present. The presence of peroxide is tested every 30 min. When dosing is finished the solution is cooled down with stirring. The aqueous solution obtained can be used as it is or the copolymer can be obtained from the solution by conventional methods.

The arrangement of the monomer units A (derived from acrylate) and B (derived from I-PEG) in the copolymer is essentially random. The molar ratio of monomer units A to monomer units B in the copolymer is about 3.6/1.

### 2. Preparation of polycarboxylate ether P2

Premixes I, II and III were prepared in the same way as those for preparation of polycarboxylate ether P1.

### Synthesis

2200 g of water were charged into a reactor. 57 g of Na-hypophosphoric acid were added and the mixture was stirred until the solid is completely dissolved. The reaction mixture was stirred during the whole synthesis. 2430 g of H-PEG were added as a powder during which the mixture is heated to a temperature of about 40°C and stirred until H-PEG was dissolved. Subsequently, solid iron(II) sulfate (1,20 g) was added into the reactor. Then, the mixture was cooled down to 25°C. Next 80 g of Premix I was added. Subsequently, Premix II, Premix III and the rest of Premix I were dosed to the mixture within about 1 h. After 5 min of dosing, the necessary presence of peroxide was tested by a peroxide strip which turns into blue when peroxide is present. The presence of peroxide is tested every 30 min. When dosing is finished the solution is cooled down with stirring. The aqueous solution obtained can be used as it is or the copolymer can be obtained from the solution by conventional methods.

The arrangement of the monomer units A (derived from acrylate) and B (derived from H-PEG) in the copolymer is essentially random. The molar ratio of monomer units A to monomer units B in the copolymer is about 3.6/1.

### 3. Preparation of masonry cement

Cements were prepared in a laboratory scale mill (Siebtechnik drum mill TTS 50, equipped with temperature controller, drum volume 50 L, milling capacity 10 kg). The type and amount of raw materials and copolymer used as air-entraining agent are shown in Table 1 below. A 50% aqueous solution of copolymer P1 or P2, respectively, as prepared above is fed together with the raw material of the cement into the mill where the materials are milled at a controlled temperature of 105 to 110°C and an intergrinding time of 60 min. The samples were then aged at 110°C for 24 h.

Thus, Examples 1-4 and the Reference Example (Ref.) were prepared.

The weight percentage of the cement components is based on the total weight of the cement components. The proportion of P1 and P2 (on a dry basis) is also based on the total weight of the cement components.

**Table 1**

| | P1 (ppm) | P2 (ppm) | clinker (% by weight) | gypsum (% by weight) | fly ash (% by weight) |
|---|---|---|---|---|---|
| Ref. | - | - | 70.0 | 5.0 | 25.0 |
| Ex. 1 | 500 | - | 70.0 | 5.0 | 25.0 |
| Ex. 2 | - | 500 | 70.0 | 5.0 | 25.0 |
| Ex. 3 | 1500 | - | 70.0 | 5.0 | 25.0 |
| Ex. 4 | - | 1500 | 70.0 | 5.0 | 25.0 |

### 5. Testing

The properties of samples of Examples 1 to 4 and the Reference Example were tested according to ASTM and EN standards for mortar and strength testing. For Table 2, ASTM standard for mortar and strength testing was used using ASTM Ottawa sand. For Table 3, EN standard for mortar and strength testing was used using EN sand which grading is coarser than ASTM Ottawa sand.

The tests were carried out on the dry sample (Auto Blaine, residue 45 µm) or on a sample mixed with water (all other tests). For the tests on the cement water mixtures Table 2 below indicate the water cement ratio (W/C) used as well as the decreased water amount in Examples 2 and 3 compared to the Reference Example in percentage (W/C (%)). The tests of Table 3 were carried out on a cement water mixture with a fixed water-cement ratio of 0.500.

The following standards and methods, respectively, were used for determining the respective properties. Flow and compressive strength were measured by either ASTM standard or EN standard, all other parameters were measured by EN standard

| | Unit | ASTM standard | EN standard |
|---|---|---|---|
| Flow | mm | ASTM C1437 | EN 1015-3 |
| Compressive strength* | MPa | ASTM C 109/C 109M-05 | EN196-1 |

| | | | |
|---|---|---|---|
| * determined after different periods | | | |

| | Unit | EN standard |
|---|---|---|
| Air content | vol.-% | EN459-2 |
| Wet density | Kg/L | EN12350-6 |
| Residue 45 µm | % | EN196-6:1989 |
| Auto Blaine No* | cm²/g | EN196-6:1989 |

| | | |
|---|---|---|
| * Blaine value determined with Automatic blaine apparatus | | |

The air content was measured according to EN459-2 on an air meter. The air meter utilizes the principle of Boyles' Law and consists of a flanged cylindrical vessel and cover assembly incorporating a pressure gauge air pump and valves. The base can also be used for unit weight wet or fresh mixed mortar density. It is conforming to the EN459-2 standard. The procedure is as follows: Fill in the fresh mortar into the bottom cylindrical flanged vessel for 3 layer and each layer was tampering 25 strokes by hand. Smooth leveling of the last layer mortar then clamping and locking with the cover. Jet in water from the inlet valve till full water running out from the outlet valve and quickly lock the outlet valve and the inlet valve. Apply the pressure by hand pumping strokes till the needle air reading meter indicated below 0% scale and fix and lock the pumping strokes. Then adjust or correct the needle reading air to 0% by pressing the CORRECTION button. Finally press the TEST button, the needle reading will point out the air level reading in %v/v.
The results of the tests according to standards ASTM and EN are given in Tables 2 and 3, respectively.

**Table 2 Flow and compressive strength determined by ASTM methods, all other parameters by EN methods**

| | W/C | W/C (%) | ASTM Flow (mm) | Air content (%) | Wet density (Kg/L) | Residue 45µm (%) | Auto Blaine No (cm²/g) | Compressive strength (MPa) | | | | |
|---|---|---|---|---|---|---|---|---|---|---|---|---|
| | | | | | | | | 16h | 2d | 3d | 14d | 28d |
| Ref. | 0.485 | - | 111 | 4.60 | 2.192 | 5.20 | 3380 | 4.23 | 13.28 | 15.58 | 29.63 | 37.31 |
| Ex.1 | 0.470 | 3.07 | 105 | 8.40 | 2.102 | 5.70 | 3450 | 3.95 | 14.68 | 16.01 | 24.83 | 36.50 |
| Ex.2 | 0.457 | 5.74 | 107 | 10.00 | 2.069 | 5.70 | 3350 | 3.86 | 14.38 | 14.63 | 25.22 | 34.69 |

**Table 3 Results determined by EN methods, W/C = 0.500**

| | EN Flow (mm) | Air content (%) | Wet density (Kg/L) | Residue 45µm (%) | Auto Blaine No (cm²/g) | Compressive strength (MPa) | | | | |
|---|---|---|---|---|---|---|---|---|---|---|
| | | | | | | 16h | 2d | 3d | 24d | 28d |
| Ref. | 242 | 1.90 | 2.280 | 5.20 | 3380 | 3.99 | 16.91 | 21.00 | 39.81 | 42.23 |
| Ex. 1 | 251 | 5.90 | 2.170 | 5.70 | 3450 | 3.33 | 16.26 | 20.35 | 37.09 | 37.59 |
| Ex. 2 | 253 | 7.30 | 2.143 | 5.70 | 3350 | 1.97 | 14.02 | 19.50 | 35.07 | 35.64 |
| Ex. 3 | 292 | 7.50 | 2.067 | 5.70 | 3420 | 6.15 (1d) | 17.82 | 22.43 (7d) | - | 37.42 |
| Ex. 4 | 296 | 10.00 | 2.045 | 5.70 | 3370 | 4.06 (1d) | 15.65 | 21.06 (7d) | - | 36.36 |

As can be seen from Tables 2 and 3, the air content in cement water mixtures can significantly be enhanced by using the polycarboxylate ethers as air-entraining agents according to the invention. The air entrainment is still further increased when P2 is used instead of P1. The water reducing effect and flow are also improved when P2 is used.

## Claims

1. Use of a polycarboxylate ether as an air-entraining agent in a composition comprising a hydraulic binder, wherein the polycarboxylate ether is a copolymer comprising monomer units A of acrylic acid or a salt thereof and monomer units B of polyethylene glycol isoprenyl ether and/or polyethylene glycol methallyl ether.

2. Use according to claim 1, wherein monomer unit A has the following structure 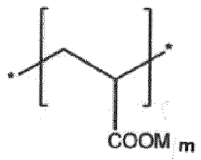 and monomer unit B has at least one of the following structures 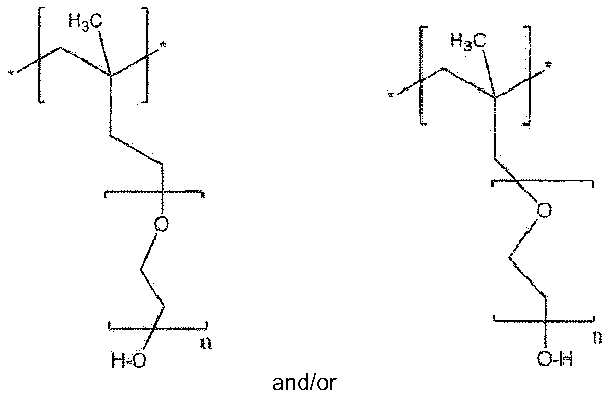 wherein M represents H, alkali metal ion, earth alkaline metal ion, divalent or trivalent metal, ammonium or organic ammonium or a mixture thereof; m is 1, 1/2 or 1/3 when M is a mono-, di- or trivalent cation, respectively; n is independently from 3 to 250, preferably from 20 to 150, and more preferably from 40 to 90; and the molar ratio of monomer units A to monomer units B is in the range from 10/1 to 1/2, preferably from 6/1 to 1/1.

3. Use according to claim 1 or claim 2, wherein the copolymer comprises 30 to 95 mol-%, preferably 60 to 90 mol-%, of monomer units A and 5 to 70 mol-%, preferably 10 to 40 mol-%, of monomer units B.

4. Use according to any one of claims 1 to 3, wherein the copolymer comprises the following monomer units A and B 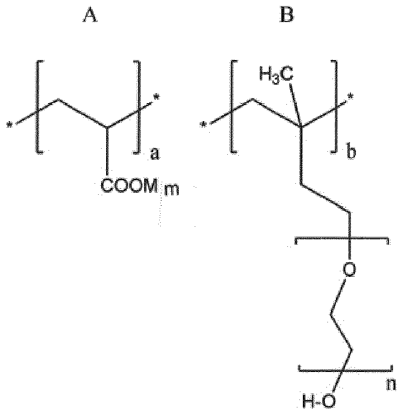 or
the copolymer comprises the following monomer units A and B 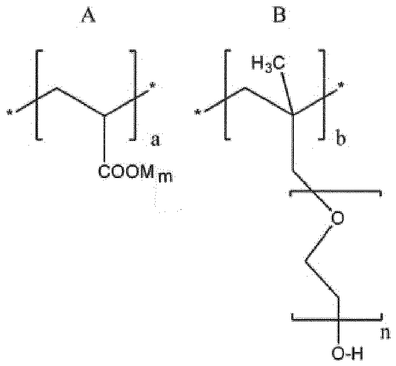 wherein, in both cases, M represents H, alkali metal ion, earth alkaline metal ion, divalent or trivalent metal, ammonium or organic ammonium or a mixture thereof; m is 1, 1/2 or 1/3 when M is a mono-, di- or trivalent cation, respectively; n is from 3 to 250, preferably from 20 to 150, and more preferably from 40 to 90; and the molar ratio a/b of monomer units A to monomer units B is in the range from 10/1 to 1/2, preferably from 6/1 to 1/1, wherein it is preferred that the molar ratio a/b is from 6/1 to 2.5/1, preferably from 5/1 to 3/1, and n is from 40 to 90.

5. Use according to any one of claims 1 to 4, wherein the hydraulic binder comprises fly ash.

6. Use according to any one of claims 1 to 5, wherein the hydraulic binder comprises Portland cement, preferably fly ash and Portland cement.

7. Use according to any one of claims 1 to 6, wherein the hydraulic binder is a cement, in particular a masonry cement.

8. Use according to any one of claims 1 to 7, wherein the composition is a cement or a mortar, in particular a mortar comprising masonry cement.

9. Use according to any one of claims 1 to 8, wherein the polycarboxylate ether is used in an amount of 50 to 5000 ppm, preferably 250 to 2500 ppm, based on the dry weight of the hydraulic binder.

10. Use according to any one of claims 1 to 9, wherein the polycarboxylate ether is added to the composition before, during or after grinding the raw materials of the hydraulic binder to prepare the hydraulic binder, preferably a cement, preferably before or during grinding.

11. Use according to any one of claims 1 to 10, wherein the polycarboxylate ether is prepared by radical copolymerization of monomers comprising acrylic acid or a salt thereof and at least one of polyethylene glycol isoprenyl ether and polyethylene glycol methallyl ether.

12. An air-entraining agent for use in a composition comprising a hydraulic binder, wherein the air-entraining agent is a polycarboxylate ether which is a copolymer comprising monomer units A of acrylic acid or a salt thereof and monomer units B of polyethylene glycol isoprenyl ether and/or polyethylene glycol methallyl ether.

13. The air-entraining agent according to claim 12, wherein the copolymer comprises the following monomer units A and B 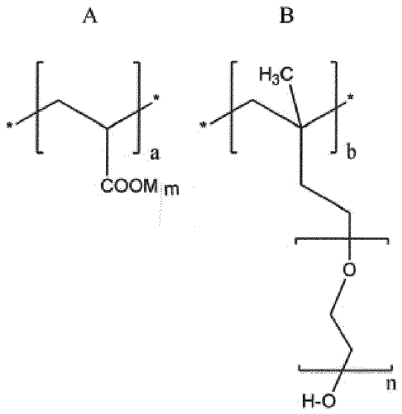 or
the copolymer comprises the following monomer units A and B 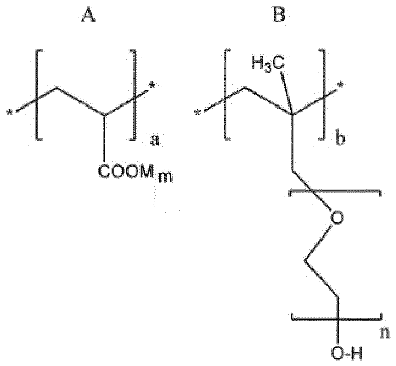 wherein, in both cases, M represents H, alkali metal ion, earth alkaline metal ion, divalent or trivalent metal, ammonium or organic ammonium or a mixture thereof; m is 1, 1/2 or 1/3 when M is a mono-, di- or trivalent cation, respectively; n is from 3 to 250, preferably from 20 to 150, and more preferably from 40 to 90; and the molar ratio a/b of monomer units A to monomer units B is in the range of from 10/1 to 1/2, preferably from 6/1 to 1/1.

14. The air-entraining agent according to claim 13, wherein the molar ratio a/b is from 6/1 to 2.5/1, preferably 5/1 to 3/1, and n is from 40 to 90.

15. The air-entraining agent according to any one of claims 12 to 14, wherein the hydraulic binder comprises fly ash, preferably fly ash and Portland cement.
